# EUROPEAN PATENT SPECIFICATION

(11) **EP 3 863 361 B1**
(45) Date of publication and mention of the grant of the patent: **19.11.2025**
(21) Application number: 20216072.7
(22) Date of filing: 21.12.2020
(51) Int. Cl.: H04W 74/0816, H04L 5/00

(54) **EHT AP CONFIGURED FOR MULTI-AP OPERATIONS USING COORDINATED ANNOUNCEMENT (COA) FRAME**
EHT-AP MIT KONFIGURATION FÜR MEHRFACH-AP-OPERATIONEN UNTER VERWENDUNG EINES RAHMENS MIT KOORDINIERTER ANSAGE (COA)
AP EHT CONFIGURÉ POUR LES OPÉRATIONS MULTI-AP UTILISANT UNE TRAME D'ANNONCE COORDONNÉE (COA)

(30) Priority: 07.02.2020 US 202062971360 P; 06.05.2020 US 202063020694 P
(43) Date of publication of application: 11.08.2021
(73) Proprietor: INTEL Corporation, Santa Clara, CA 95054 (US)
(72) Inventor: DAS, Dibakar, Hillsboro, OR 97123 (US); CARIOU, Laurent, Portland, OR 97219 (US); AKHMETOV, Dmitry, Vadimovich, Hillsboro, OR 97124 (US); BRAVO, Daniel F., Hillsboro, OR 97229 (US); CHEN CHENG, Portland, OR 97229 (US); GHOSH, Chittabrata, Fremont, CA 94536 (US)
(74) Representative: Viering, Jentschura & Partner mbB Patent- und Rechtsanwälte

(56) References cited:
- EP-A1- 3 641 458
- EP-A1- 3 691 384
- CN-A- 109 067 436

## Description

### PRIORITY CLAIMS

This application claims priority to United States Provisional Patent Application Serial No. 62/971,360, filed February 07, 2020 [reference number AC6733-Z] and United States Provisional Patent Application Serial No. 63/020,694, filed May 06, 2020 [reference number AC9677-Z].

### TECHNICAL FIELD

Embodiments pertain to wireless communications. Some embodiments relate to wireless local area networks (WLANs). The invention relates to WLAN communications in accordance with the IEEE 802.11be draft standard (i.e., Extremely High Throughput (EHT)). and to multi-access point (multi-AP) operations in EHT networks.

### BACKGROUND

One issue multi-AP operations is coordinating AP operations with other APs to address hidden nodes.

CN109067436A concerns a backward compatible wireless local area network multi-AP cooperative communication method. APs of multiple BSSs are labeled in a Beacon frame when the frame is periodically broadcast so that an OBSS station learns which APs have the ability to transmit cooperatively with multiple APs. When the OBSS station is associated to multiple APs at multiple BSSs, one of them should be selected as the TXOP holder to prepare for multiple BSSs to transmit CTS cooperatively with the multiple APs. An enhanced frame structure for network allocation appropriate settings is sent by the TXOP holder and then OBSS station(s) provides CSI feedback for multiple Aps, the multiple APs performing optimization of their transmissions according to the CSI feedback. EP3691384A1 discloses a coordinated multi-AP method in which a coordinator AP exchanges PCS channel switch requests with multiple coordinated APs. EP3641458A1 discloses a coordinated Multi-AP system in which a coordinator AP allocates RUs to multiple coordinated APs within its TXOP.

### SUMMARY

The invention is an apparatus and computer-readable storage medium as defined in the appended claims.

### BRIEF DESCRIPTION OF THE DRAWINGS

FIG. 1 illustrates a multi-AP transmission sequence in accordance with some embodiments.
FIG. 2 illustrates a multi-AP transmission sequence including a channel switch phase in accordance with some embodiments.
FIG. 3 illustrates issues with hidden nodes in accordance with some embodiments.
FIG. 4 illustrates a multi-AP transmission sequence including NAV setting in accordance with some embodiments.
FIG. 5 illustrates a triggered peer-to-peer exchange in accordance with some embodiments.
FIG. 6 illustrates a functional block diagram of an EHT AP in accordance with some embodiments.

### DETAILED DESCRIPTION

The following description and the drawings sufficiently illustrate specific embodiments to enable those skilled in the art to practice them. Other embodiments may incorporate structural, logical, electrical, process, and other changes. Portions and features of some embodiments may be included in, or substituted for, those of other embodiments.

The invention is directed to an extremely high throughput (EHT) access point (AP) that may be configured to operate as a coordinated AP (AP1) in a multi-AP group that includes a coordinator AP (AP0) and one or more other coordinated APs of a set of coordinated APs. The set of coordinated APs may include at least the AP1 and a second coordinated AP (AP2). In the present invention the AP1 decodes a coordinated announcement (CoA) frame received from the APO during a transmission opportunity (TXOP) acquired by the AP0. The CoA frame indicates a resource allocation for the AP1 and a resource allocation for the AP2. The resource allocations are for use during a remainder of the TXOP for data (MU DL or UL) communication/exchange with their associated stations. The CoA frame comprises instructions to instruct the AP1 and the AP2 to transmit duplicated legacy frames to inhibit transmissions of associated stations during the resource allocations. These embodiments are discussed in more detail below.

The IEEE 802.11be spec is expected to define Multi-AP operations to improve latency and edge throughput. In its essence the solution involves one AP coordinating by over the air signaling, the downlink (DL) and uplink (UL) transmissions of non-collocated APs. This AP is called the Coordinator AP and transmits a new frame, referred to herein as coordinated announcement (CoA) frame, that contains the resource allocation for other APs. Such resource allocation information may include the set of 20 MHz channels that a given Coordinated AP is allowed to operate on for the rest of the transmit opportunity (TXOP), the duration for the operation. Each of the Coordinated APs then operate in their assigned time-frequency space to communicate to respective associated STAs.

The IEEE 802.11be spec is expected to allow Direct link transmission so as to improve throughput and latency performance by taking advantage of one-hop communication. In general, this operation is expected to reuse the signaling developed for Multi-AP communications. In other words, the Coordinator AP will trigger a Direct Link STA by transmitting a Trigger/COA frame to initiate P2P communication with another Peer STA during some time allocated within the TXOP. However, some legacy pre-11be STAs may want to reuse their own P2P data protocol exchange (e.g., NAN or proprietary) without one that relies on the COA frame transmission. As such a mechanism is needed for a STA to communicate when it wants to use the legacy P2P exchange and when to use the one using COA frame. The solution developed proposes the scheduled APs relay allocation information similar to MU-CTS to solve the problem of communicating the channel switch request information to hidden nodes that cannot hear the Coordinator AP. Current solutions only discuss forwarding the information from scheduled APs and does not solve the hidden node problem.

Example embodiments of the present disclosure relate to systems, methods, and devices for a mechanism to enhance Multi-AP operations. In one or more embodiments, a multi-AP operations system may facilitate that prior to the resource allocation via COA frame, the Coordinated APs signal to the Coordinator AP if it wants to use primary channel switch or not. The Coordinated APs that are not scheduled currently can also propagate the allocation information using a frame that can be understood by legacy STAs.

In one or more embodiments, a multi-AP operations system may define signaling for the peer-to-peer (P2P) STAs to signal whether it wants the COA frame to initiate P2P sequence or not.

The proposals offer better legacy support and medium protection. This in turn widens the scope of products that are likely to use the Multi-AP feature as well as improve their overall performance.

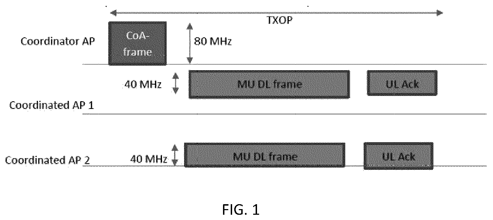

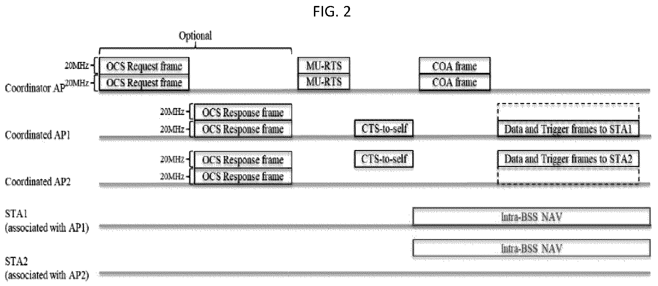

FIGs. 1-4 depict illustrative schematic diagrams for multi-AP operations, in accordance with one or more example embodiments of the present disclosure. FIG. 1 shows an example of the basic Multi-AP transmission sequence. In general, a given Coordinated AP may operate its BSS with a different primary 20 MHz channel than the one it has been allocated resources for by the Coordinator AP. As such in order to temporarily migrate the operating channel of the STAs associated to its BSS to the one allocated by the Coordinator AP, there are some proposals to include a way for the Coordinated APs to signal the new channel information before commencing data operation on those channels. Moreover, in order to protect the CoA frame from being interfered upon by hidden nodes in another BSS, it has been proposed that a MU-RTS CTS exchange may precede the transmission of the Co-A frame. In some cases, this exchange may be combined via the signaling for announcing channel switch information. FIG. 2 shows an example of the modified operation with the above new signaling.

FIG. 2 shows an example of a Multi-AP transmission sequence for Coordinated OFDMA showing the channel switch phase (i.e., the OCS Request/Response frame exchange), the NAV protection via MU-RTS and CTS frames and the actual data transmission part with a preceding COA frame. The CTS frame in this case is a CTS-to-self frame so as to only set Intra-BSS NAV.

**Legacy STA support:** The scheme as shown in FIG. 2 works well if the STAs that participate in the Multi-AP transmission sequence are EHT STAs which can understand the new OCS Request/Response frame. However, legacy 11ax STAs that do not understand this new frame will not be able to switch their primary 20 MHz channels and likely won't be served by its associated AP. As such there needs to be way for the Coordinated AP to inform the Coordinator AP about whether or not it intends to perform a channel switch.

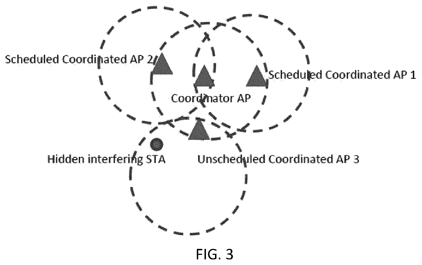

**Protection from hidden nodes:** The CTS-to-self frame transmitted by a scheduled Coordinated AP only sets the NAV for the STAs that are within the range of that AP. Further protection for any DL communication may be obtained by legacy RTS-CTS or MU RTS-CTS exchange by that AP within the allocated time prior to actual data transmission in UL or DL. However, none of such schemes protect the intended Multi-AP sequence from being disrupted upon by transmission from a STA that is outside the range of that Coordinated AP but associated to one AP in the Multi-AP set as shown in FIG. 3.

FIG. 3 shows an example topology of a hidden interfering STA that can disrupt the Multi-AP transmission sequence. The dashed circles indicate the transmission range of respective APs in the center. In this example the Coordinator AP schedules Coordinated AP 1 in the first half of a TXOP and the Coordinated AP 2 in the remaining TXOP in TDMA fashion. However, the STA that is outside the range of AP 1 may transmit just before the scheduled transmission of AP 2 thereby disrupting the intended operation in the Multi-AP group.

### Legacy STA support:

In one or more embodiments, a Coordinated AP can signal to the Coordinator AP(s) about whether it prefers not to be allocated resources in a channel that does not include its primary 20 MHz channel. In one embodiment the Coordinated AP can signal during Multi-AP setup whether it prefers not to be allocated resources in a channel that does not include its primary 20 MHz channel for the entirety of its operation.

In one embodiment the Coordinated AP can signal time schedules in which it prefers not to be allocated resources in a channel that does not include its primary 20 MHz channel.

In one embodiment the Coordinated AP can signal to the Coordinator AP anytime during its operation or after being polled by the Coordinator AP about whether it prefers not to be allocated resources during a Multi-AP transmission sequence in a channel that does not include its primary 20 MHz channel.

The signaling could be carried in an A-Ctrl field or some other field or element in an existing or new frame. The signaling could be just be a bit signaling its current capability. The signaling could be a bit and/or the future time at which the AP can utilize a resource allocation that does not contain its default primary 20 MHz channel.

The Coordinator AP uses this information in deciding how to allocate resources to that Coordinated AP. The Coordinated AP can further signal to the Coordinator AP about whether it needs to transmit a separate frame (i.e., the OCS Response frames in FIG. 2) during all or some Multi-AP transmission sequences to migrate EHT STAs associated to it to a new temporary primary channel. The Coordinated AP may not need to transmit or receive this frame if it has communicated (e.g., via the SST operation in 11ax or its extensions) to its associated STAs to migrate to a particular primary 20 MHz channel for specific time windows. The Coordinated AP in this case is assumed to have negotiated with the Coordinator AP about the temporary primary 20 MHz channels to be allocated in such time windows.

### Protection from hidden nodes:

It is proposed that the Coordinator AP optionally instructs a set of Coordinated APs to transmit a specific legacy frame in a 20 MHz channel on behalf of a Coordinated/Coordinator AP to protect from transmission of the respective associated STAs. The legacy frame could be a CTS frame or some other short frame. In one embodiment where a CTS frame is used, the RA field of the CTS frames transmitted by the Coordinated APs in a 20 MHz channel contain the MAC address of the Coordinated AP that is allocated resources in that 20 MHz channel for that time window. In one embodiment where a CTS frame is used, the Coordinator AP can instruct only those STAs to transmit such CTS frames which have not been scheduled in any 20 MHz channel for that time-window. In one embodiment the frame from the Coordinator AP that contains this instruction is the COA frame with special signaling to indicate if CTS frame transmission is required or not.

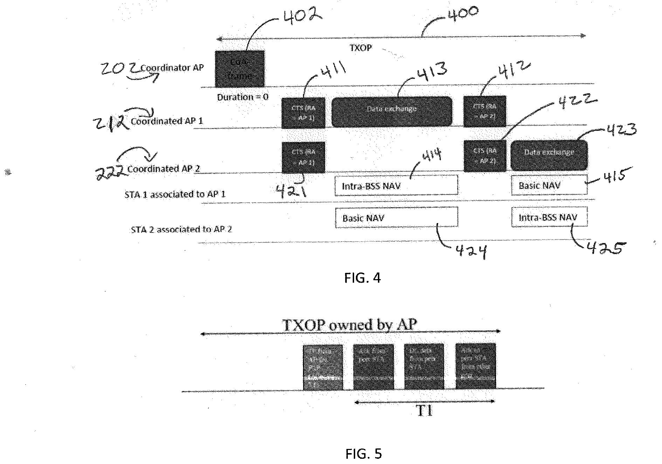

FIG. 4 shows an example of the above transmission sequence where a Coordinator AP schedules Coordinated APs 1 and 2 in two successive parts inside a TXOP. The COA frame provides the resource allocation information as well as instructs the two Coordinated APs to transmit CTS frames on behalf of the AP that is scheduled at that time. Accordingly, STAs associated to this AP sets their NAV and does not contend. FIG. 4 show an example of NAV setting with duplicated CTS frame transmissions from Coordinated APs.

### P2P operation support:

Terminology:
**TD P2P** STA: a STA that is triggered by an AP to initiate Direct Link/P2P transmission.
**TD Peer** STA: a STA to which the TD P2P STA initiates P2P transmission.
**Assumption:** a TD P2P STA can request either periodic or aperiodic resource request. In the periodic case the Triggered Direct P2P STA requests specific time windows (e.g., via a TWT element) when it intends to be scheduled for Triggered P2P operations. In the aperiodic case the STA can request for such allocations dynamically (e.g., via a modified OMI procedure).

The following in additions are proposed:
In the frame requesting such resource allocation, the Triggered Direct P2P STA further signals the particular channel that it would like to use for P2P operation.

If the STA is collocated with a soft-AP, then it signals the corresponding AP interface address (if different) that it will use for the P2P operation.

If the device containing the STA is capable of operating as a DFS Master (i.e., ability to detect radar and move operation to a new channel).

The Triggered Direct P2P STA further signals whether it requires the AP to transmit a COA frame initiating the P2P operation or not. This could be for all Triggered P2P operation or some Triggered P2P operation (signaled either dynamically or statically).

In one embodiment if the Triggering AP is part of a Multi-AP set then it may broadcast any periodic resource allocation information to all the other APs in that set who in turn can broadcast this in their BSS. EHT AP and/or STAs upon learning of this information either don't contend during the corresponding time-window or contend with higher backoff window.

In one embodiment if the Triggering AP is part of a Multi-AP set then it may broadcast any QoS related information (e.g., TSPEC) received from the TD P2P STA to all the other APs in that set who in turn may broadcast this to their BSS. This enables any AP in the Multi-AP set containing the TD P2P STA within its transmission range of to initiate a Triggered P2P operation with the latter.

This behavior can be extended to also general Multi-AP case in which a non-AP STA provides the QoS information to one AP but the information (as it is or modified to hide the STA identity) is then shared across all the APs in the Multi-AP set.

In one embodiment, if a TD P2P STA has signaled that it does not want a Trigger frame from the AP to initiate a P2P operation within a particular time-frequency window the AP shall not transmit such a frame. However, to protect the P2P frame transmissions it may either not contend for channel access during this window or contend after detecting channel being idle for some threshold time.

In one embodiment if the TD P2P STA has signaled its not DFS Master capable, then it can only operate in a DFS channel when triggered by an AP.

It is understood that the above descriptions are for purposes of illustration and are not meant to be limiting.

It has been previously proposed in 11be to allow trigger-based peer-to-peer exchanges. The basic motivation is to support some peer-to-peer (P2P) applications such as wireless screen share, augmented reality (AR)/virtual reality (VR) etc. in a medium efficient way. The essential concept is to allow a special trigger frame that solicits a station device (STA) to transmit to its peer STA. However, the previous proposals do not address how the triggering access point (AP) knows whether the peer STA is going to utilize the allocation in the trigger frame.

Example embodiments of the present disclosure relate to systems, methods, and devices for a mechanism to enhance triggered P2P for EHT. In one embodiment, a P2P for EHT system may facilitate that the AP solicits an acknowledgement from the peer STA that allocates the resources for it. In one embodiment, a P2P for EHT system may improve medium efficiency while preserving the gains due to triggered peer-to-peer transmissions.

FIG. 5 depicts an illustrative schematic diagram for P2P for EHT, in accordance with one or more example embodiments of the present disclosure.

In one or more embodiments, a P2P for EHT system may facilitate the following sequence:
- An AP allocates a time/frequency resource to a peer STA by transmitting a Control or Management frame that carries the allocation. In one embodiment an 11ax or EHT Trigger frame could be used with special bit signaling that this is for peer-to-peer exchange. This could be signaled in the Common Info or the User Info field of the Trigger frame (or the equivalent modifications for EHT).
- The exact allocation can be carried in the uplink (UL) Length field or in a new field in the Trigger frame.
- The Duration field value may be set to zero so that the basic network allocation vector (NAV) is not inadvertently set at one of the peer STAs.
- Multiple peer STAs may be simultaneously allocated.
- The association identification (AID) necessary for the allocation may be obtained via proprietary mechanism if the STA is not associated to the AP or signaled via a negotiation phase.
- If the peer STA accepts this allocation it acknowledges the same by transmitting a frame after a short inter-frame space (SIFS). In one embodiment this frame could be an Ack frame carried in an single user (SU) physical layer (PHY) protocol data unit (PPDU) or inside a trigger based (TB) PPDU. The legacy signal field (L_SIG) of the Ack frame may contain a length field to protect the allocation and may be shorter than the allocation provided by the AP if not carried in a TB PPDU.
- Following the reception of the acknowledgement frame the AP refrains from transmitting any frame in the rest of the allocation. In one embodiment the AP may regain medium access after detecting the medium to be idle for PIFS.
- Following the transmission of the acknowledgement frame the peer STA(s) starts regular peer-to-peer transmissions in the rest of the allocated time.

As illustrated in FIG. 4, an EHT AP is configured to operate as a coordinated AP (AP1) in a multi-AP group that includes a coordinator AP (AP0) and one or more other coordinated APs of a set of coordinated APs. The set of coordinated APs includes at least the AP1 and a second coordinated AP (AP2). The AP1 decodes a coordinated announcement (CoA) frame 402 received from the AP0 during a transmission opportunity (TXOP) 400 acquired by the AP0. The CoA frame 402 indicates a resource allocation 413 for the AP1 and a resource allocation 423 for the AP2. The resource allocations are for use during a remainder of the TXOP for data (MU DL or UL) communication/exchange with their associated stations. The CoA frame comprises instructions to instruct the AP1 and the AP2 to transmit duplicated legacy frames to inhibit transmissions of associated stations during the resource allocations 413 423.

The duplicated legacy frames comprise clear-to-send (CTS) frames, and wherein the instructions instruct the AP1 and the AP2 to transmit a first set of duplicated CTS frames 411 421 during the TXOP 400 prior to the resource allocation 413 for the AP1. The instructions instruct the AP1 and the AP2 to transmit a second set of duplicated CTS frames 412 422 during the TXOP 400 prior to the resource allocation 423 for the AP2.

In some embodiments, the instructions in the CoA frame 402 indicate that the first set of duplicated CTS frames 411 421 are to be encoded with a receiver address (RA) set to an RA of the AP1 and that the second set of duplicated CTS frames 412 422 are to be encoded with a RA set to an RA of the AP2. In these embodiments, the duplicated CTS frames 411 421 of the first set cause stations (STAs) (STA1) associated with the AP1 to set their intra-BSS NAV 414 and cause STAs (STA2) associated with the AP2 to set their basic NAV 424 during the resource allocation 413 for the AP1. In these embodiments, the duplicated CTS frames 412 422 of the second set cause STAs (STA1) associated with the AP1 to set their basic NAV 415 and to cause STAs (STA2) associated with the AP2 to set their intra-BSS NAV 425 during the resource allocation 423 for the AP2. Accordingly, this prevents STAs (STA1) associated with AP1 and STAs (STA2) associated with the AP2 from accessing the channel and affecting the TXOP.

In some embodiments, in response to the instructions in the CoA frame 402, the AP1 of the AP1 is configured to encode a first CTS frame 411 of the first set of duplicated CTS frames 411 421 with the RA set to the RA of the AP1 for transmission during the TXOP 400 prior to the resource allocation 413 for the AP1, and encode a second CTS frame 412 of the second set of duplicated CTS frames 412 422 with the RA set to the RA of the AP2 for transmission during the TXOP prior to the resource allocation 423 for the AP2. In these embodiments, in response to the instructions in the CoA frame 402, the AP2 may encode a CTS frame 421 of the first set of duplicated CTS frames 411 421 with the RA set to the RA of the AP1 for transmission during the TXOP 400 prior to the resource allocation 413 for the AP1, and encode a CTS frame 422 of the second set of duplicated CTS frames 412 422 with the RA set to the RA of the AP2 for transmission during the TXOP prior to the resource allocation 423 for the AP2.

In some embodiments, the resource allocation comprises an allocation of a channel (i.e., a 20 MHz channel, a 40 MHz channel, 80 MHz channel, etc.) and a duration (i.e., a length of transmission) with the TXOP. In these embodiments, the first CTS frame 411 and the second CTS frame 412 are transmitted by the AP1 on the channel allocated to the AP1 prior to the resource allocation 413 to the AP1. In these embodiments, the CTS frame 421 and the CTS frame 422 are transmitted by the AP2 on the channel allocated to the AP2 prior to the resource allocation 423 to the AP2. In some embodiments, the resource allocation may include an allocation on a primary channel and up to one or more secondary channel. In some embodiments, the resource allocation may include tones, resource units (RUs) and/or time slots.

In some embodiments, the CoA frame 402 is a trigger frame to trigger peer-to-peer (P2P) operations. In these embodiments, the AP1 is configured to operate as triggered direct (TD) P2P STA and the AP2 is configured to operate as a TD peer STA, and the trigger frame is to trigger the TD P2P STA to initiate a direct link P2P transmission with the TD peer STA during the resource allocation.

In some embodiments, in response to the trigger frame, the AP1 of the AP1 is configured to encode an acknowledgement for transmission to the AP0 when the AP1 accepts the resource allocation. An example of this is illustrated in FIG. 5.

In some embodiments, for NAV protection of the CoA frame prior to transmission of the CoA frame, the AP1 of the AP1 is configured to decode a MU-RTS frame on the resources to be allocated to the AP1 in the CoA frame, and transmit a CTS-to-self for NAV protection on the resources allocated to the AP1. In these embodiments, the AP2 may also decode the MU-RTS frame and transmit a CTS to self on the resources to be allocated to the AP2 in the CoA frame for NAV protection on the resources allocated to the AP2. In these embodiments, the CTS-to-self transmitted by the AP1 cause stations associated with the AP1 (i.e., STA1) to set only their intra-BSS NAV for a duration of the TXOP, and the CTS-to-self transmitted by the AP2 cause stations associated with the AP2 (i.e., STA2) to set only their intra-BSS NAV for a duration of the TXOP. An example of this is illustrated in FIG. 2

In some embodiments, prior to receive of the CoA frame, the AP1 of the AP1 is configured to decode a primary channel switch request frame (PCS request frame) received from the AP0, the PCS request frame requesting that the AP1 switch its primary channel to a channel to be allocated in the CoA frame, and encode a PCS response for transmission to the AP0 indicating confirming whether or not the AP1 will switch its primary channel. In these embodiments, the PCS request frame may be transmitted from the AP0 when the BSS of the AP1 or a BSS of the AP2 utilizes a primary channel that is not going to be allocated to the AP1 in the resource allocation. An example of this is illustrated in FIG. 2.

In some embodiments, a physical layer protocol data unit may be a physical layer conformance procedure (PLCP) protocol data unit (PPDU). In some embodiments, the AP and STAs may communicate in accordance with one of the IEEE 802.11 standards, specifically including IEEE draft specification IEEE P802.11ax/D4.0, February 2019.

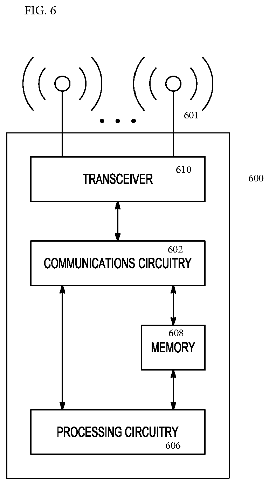

In one embodiment, FIG. 6 illustrates a functional block diagram of a communication station that may be suitable for use as an EHT AP or EHT STA in accordance with some embodiments. The communication station 600 may also be suitable for use as a handheld device, a mobile device, a cellular telephone, a smartphone, a tablet, a netbook, a wireless terminal, a laptop computer, a wearable computer device, a femtocell, a high data rate (HDR) subscriber station, an access point, an access terminal, or other personal communication system (PCS) device.

The communication station 600 may include communications circuitry 602 and a transceiver 610 for transmitting and receiving signals to and from other communication stations using one or more antennas 601. The communications circuitry 602 may include circuitry that can operate the physical layer (PHY) communications and/or medium access control (MAC) communications for controlling access to the wireless medium, and/or any other communications layers for transmitting and receiving signals. The communication station 600 may also include processing circuitry 606 and memory 608 arranged to perform the operations described herein. In some embodiments, the communications circuitry 602 and the processing circuitry 606 may be configured to perform operations detailed in the above figures, diagrams, and flows.

In accordance with some embodiments, the communications circuitry 602 may be arranged to contend for a wireless medium and configure frames or packets for communicating over the wireless medium. The communications circuitry 602 may be arranged to transmit and receive signals. The communications circuitry 602 may also include circuitry for modulation/demodulation, upconversion/downconversion, filtering, amplification, etc. In some embodiments, the processing circuitry 606 of the communication station 600 may include one or more processors. In other embodiments, two or more antennas 601 may be coupled to the communications circuitry 602 arranged for sending and receiving signals. The memory 608 may store information for configuring the processing circuitry 606 to perform operations for configuring and transmitting message frames and performing the various operations described herein. The memory 608 may include any type of memory, including non-transitory memory, for storing information in a form readable by a machine (e.g., a computer). For example, the memory 608 may include a computer-readable storage device, read-only memory (ROM), random-access memory (RAM), magnetic disk storage media, optical storage media, flashmemory devices and other storage devices and media.

In some embodiments, the communication station 600 may be part of a portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a medical device (e.g., a heart rate monitor, a blood pressure monitor, etc.), a wearable computer device, or another device that may receive and/or transmit information wirelessly.

In some embodiments, the communication station 600 may include one or more antennas 601. The antennas 601 may include one or more directional or omnidirectional antennas, including, for example, dipole antennas, monopole antennas, patch antennas, loop antennas, microstrip antennas, or other types of antennas suitable for transmission of RF signals. In some embodiments, instead of two or more antennas, a single antenna with multiple apertures may be used. In these embodiments, each aperture may be considered a separate antenna. In some multiple-input multiple-output (MIMO) embodiments, the antennas may be effectively separated for spatial diversity and the different channel characteristics that may result between each of the antennas and the antennas of a transmitting station.

In some embodiments, the communication station 600 may include one or more of a keyboard, a display, a non-volatile memory port, multiple antennas, a graphics processor, an application processor, speakers, and other mobile device elements. The display may be an LCD screen including a touch screen.

Although the communication station 600 is illustrated as having several separate functional elements, two or more of the functional elements may be combined and may be implemented by combinations of software-configured elements, such as processing elements including digital signal processors (DSPs), and/or other hardware elements. For example, some elements may include one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements of the communication station 600 may refer to one or more processes operating on one or more processing elements.

## Claims

1. An apparatus of an extremely high throughput, EHT, access point, AP, the apparatus comprising: processing circuitry; and memory,
wherein, when the EHT AP is configured to operate as a coordinated AP, AP1, in a multi-AP group that includes a coordinator AP, AP0, and one or more other coordinated APs of a set of coordinated APs, the set of coordinated APs including at least the AP1 and a second coordinated AP, AP2, each coordinated AP operating a corresponding BSS, the processing circuitry is configured to:
decode a coordinated announcement, CoA, frame (402) received from the AP0 during a transmission opportunity, TXOP (400), acquired by the AP0, the CoA frame indicating a resource allocation (413) for the AP1 and a resource allocation (423) for the AP2, the resource allocations for use during a remainder of the TXOP to communicate with associated stations,
the CoA frame comprising instructions to instruct the AP1 and the AP2 each to transmit legacy frames (411, 421, 412, 422) to inhibit transmissions of associated stations during the resource allocations, the associated stations being stations associated with the BSSs of the coordinated APs and the transmitted legacy frames being duplicated legacy frames used by a station supporting only protocol specifications preceding IEEE 802.11be.

2. The apparatus of claim 1, wherein the duplicated legacy frames (411, 421, 412, 422) comprise clear-to- send, CTS, frames, and wherein the instructions instruct the AP1 and the AP2 to transmit a first set of duplicated CTS frames (411, 421) during the TXOP (400) prior to the resource allocation (413) for the AP1, and
wherein the instructions instruct the AP1 and the AP2 to transmit a second set of duplicated CTS frames (412, 422) during the TXOP prior to the resource allocation (423) for the AP2.

3. The apparatus of claim 2, wherein the instructions in the CoA frame (402) indicate that the first set of duplicated CTS frames (411, 421) are to be encoded with a receiver address, RA, set to an RA of the AP1 and that the second set of duplicated CTS frames (412, 422) are to be encoded with a RA set to an RA of the AP2,
wherein the duplicated CTS frames of the first set cause stations, STAs, (STA1) associated with the AP1 to set their intra-BSS NAV (414) and cause STAs (STA2) associated with the AP2 to set their basic NAV (424) during the resource allocation (413) for the AP1, and
wherein the duplicated CTS frames of the second set cause STAs (STA1) associated with the AP1 to set their basic NAV (415) and to cause STAs (STA2) associated with the AP2 to set their intra-BSS NAV (425) during the resource allocation (423) for the AP2.

4. The apparatus of claim 3, wherein in response to the instructions in the CoA frame (402), the processing circuitry is configured to:
encode a first CTS frame (411) with the RA set to the RA of the AP1 for transmission during the TXOP (400) prior to the resource allocation (413) for the AP1; and
encode a second CTS frame (412) with the RA set to the RA of the AP2 for transmission during the TXOP prior to the resource allocation (423) for the AP2.

5. The apparatus of claim 4, wherein the resource allocation comprises an allocation of a channel and a duration with the TXOP (400), and
wherein the first CTS frame (411) and the second CTS frame (412) are transmitted by the AP1 on the channel allocated to the AP1 prior to the resource allocation to the AP1.

6. The apparatus of claim 1, wherein the CoA frame (402) is a trigger frame to trigger peer-to- peer, P2P, operations, and
wherein the AP1 is configured to operate as triggered direct, TD, P2P STA and the AP2 is configured to operate as a TD peer STA, and
wherein the trigger frame is to trigger the TD P2P STA to initiate a direct link P2P transmission with the TD peer STA during the resource allocation.

7. The apparatus of claim 6, wherein in response to the trigger frame, the processing circuitry of the AP1 is configured to encode an acknowledgement for transmission to the AP0 when the AP1 accepts the resource allocation.

8. The apparatus of claim 1, wherein prior to transmission of the CoA frame (402), the processing circuitry is configured to:
decode a MU-RTS frame on the resources to be allocated to the AP1 in the CoA frame; and
transmit a CTS-to-self for NAV protection of the resources allocated to the AP1.

9. The apparatus of claim 8 wherein prior to receive of the CoA frame (402), the processing circuitry of the AP1 is configured to:
decode a primary channel switch, PCS, request frame received from the AP0, the PCS request frame requesting that the AP1 switch its primary channel to a channel to be allocated in the CoA frame; and
encode a PCS response for transmission to the AP0 indicating whether the AP1 will switch its primary channel.

10. The apparatus of claim 1, wherein the processing circuitry comprises a baseband processor; and wherein the memory is configured to store the CoA frame (402).

11. A computer-readable storage medium that stores instructions for execution by processing circuitry of an extremely high throughput, EHT, access point, AP,
wherein, when the EHT AP is configured to operate as a coordinated AP, AP1, in a multi-AP group that includes a coordinator AP, AP0, and one or more other coordinated APs of a set of coordinated APs, the set of coordinated APs including at least the AP1 and a second coordinated AP, AP2, each coordinated AP operating a corresponding BSS,
the processing circuitry is to:
decode a coordinated announcement, CoA, frame (402) received from the AP0 during a transmission opportunity, TXOP (400), acquired by the AP0, the CoA frame indicating a resource allocation (413) for the AP1 and a resource allocation (423) for the AP2, the resource allocations for use during a remainder of the TXOP to communicate with associated stations,
the CoA frame comprising instructions to instruct the AP1 and the AP2 each to transmit legacy frames (411, 421, 412, 422) to inhibit transmissions of associated stations during the resource allocations, the associated stations being stations associated with the BSSs of the coordinated APs and the transmitted legacy frames being duplicated legacy frames used by a station supporting only protocol specifications preceding IEEE 802.11be.

12. The computer-readable storage medium of claim 11, wherein the duplicated legacy frames (411, 421, 412, 422) comprise clear-to-send, CTS, frames, and wherein the instructions instruct the AP1 and the AP2 to transmit a first set of duplicated CTS frames (411, 421) during the TXOP (400) prior to the resource allocation (413) for the AP1, and
wherein the instructions instruct the AP1 and the AP2 to transmit a second set of duplicated CTS frames (412, 422) during the TXOP prior to the resource allocation (423) for the AP2.

13. The computer-readable storage medium of claim 12, wherein the instructions in the CoA frame (402) indicate that the first set of duplicated CTS frames (411, 421) are to be encoded with a receiver address, RA, set to an RA of the AP1 and that the second set of duplicated CTS frames (412, 422) are to be encoded with a RA set to an RA of the AP2,
wherein the duplicated CTS frames of the first set cause stations, STAs, (STA1) associated with the AP1 to set their intra-BSS NAV (414) and cause STAs (STA2) associated with the AP2 to set their basic NAV (424) during the resource allocation (413) for the AP1, and
wherein the duplicated CTS frames of the second set cause STAs (STA1) associated with the AP1 to set their basic NAV (415) and to cause STAs (STA2) associated with the AP2 to set their intra-BSS NAV (425) during the resource allocation (423) for the AP2.

14. The computer-readable storage medium of claim 13, wherein in response to the instructions in the CoA frame, the processing circuitry is configured to:
encode a first CTS frame (411) with the RA set to the RA of the AP1 for transmission during the TXOP (400) prior to the resource allocation (413) for the AP1; and
encode a second CTS frame (412) with the RA set to the RA of the AP2 for transmission during the TXOP prior to the resource allocation (423) for the AP2.

15. The computer-readable storage medium of claim 14, wherein the resource allocation comprises an allocation of a channel and a duration with the TXOP (400), and
wherein the first CTS frame (411) and the second CTS frame (412) are transmitted by the AP1 on the channel allocated to the AP1 prior to the resource allocation to the AP1.

## Patentansprüche

1. Vorrichtung eines Zugangspunktes mit extrem hohem Durchsatz (Extremely High Throughput Access Point, EHT AP), wobei die Vorrichtung umfasst: eine Verarbeitungsschaltungsanordnung; und einen Speicher,
wobei, wenn der EHT AP dafür konfiguriert ist, als koordinierter AP, AP1, in einer Multi-AP-Gruppe zu arbeiten, welche einen Koordinator-AP, AP0, und einen oder mehrere weitere koordinierte APs eines Satzes von koordinierten APs enthält, wobei der Satz von koordinierten APs mindestens den AP1 und einen zweiten koordinierten AP, AP2, enthält, wobei jeder koordinierte AP ein entsprechendes BSS betreibt, die Verarbeitungsschaltungsanordnung dafür konfiguriert ist:
einen koordinierten Ankündigungsrahmen (Coordinated Announcement Frame, CoA-Rahmen) (402) zu decodieren, der von dem AP0 während einer Übertragungsgelegenheit, TXOP (400), empfangen wird, die von dem AP0 erfasst wird, wobei der CoA-Rahmen eine Ressourcenzuweisung (413) für den AP1 und eine Ressourcenzuweisung (423) für den AP2 angibt, wobei die Ressourcenzuweisungen zur Verwendung während eines Restes der TXOP bestimmt sind, um mit zugeordneten Stationen zu kommunizieren,
wobei der CoA-Rahmen Anweisungen umfasst, um den AP1 und den AP2 anzuweisen, jeweils Legacy-Rahmen (411, 421, 412, 422) zu übertragen, um Übertragungen zugeordneter Stationen während der Ressourcenzuweisungen zu verhindern, wobei die zugeordneten Stationen Stationen sind, die den BSSs der koordinierten APs zugeordnet sind, und die übertragenen Legacy-Rahmen duplizierte Legacy-Rahmen sind, die von einer Station verwendet werden, die nur Protokollspezifikationen unterstützt, die IEEE 802. 11be vorausgehen.

2. Vorrichtung nach Anspruch 1, wobei die duplizierten Legacy-Rahmen (411, 421, 412, 422) Clear-To-Send-Rahmen, CTS-Rahmen, umfassen, und wobei die Anweisungen den AP1 und den AP2 anweisen, einen ersten Satz von duplizierten CTS-Rahmen (411, 421) während der TXOP (400) vor der Ressourcenzuweisung (413) für den AP1 zu übertragen, und wobei die Anweisungen den AP1 und den AP2 anweisen, einen zweiten Satz von duplizierten CTS-Rahmen (412, 422) während der TXOP vor der Ressourcenzuweisung (423) für den AP2 zu übertragen.

3. Vorrichtung nach Anspruch 2, wobei die Anweisungen in dem CoA-Rahmen (402) angeben, dass der erste Satz von duplizierten CTS-Rahmen (411, 421) zu codieren ist mit einer Empfängeradresse (Receiver Address, RA), die auf eine RA des AP1 eingestellt ist, und dass der zweite Satz von duplizierten CTS-Rahmen (412, 422) zu codieren ist mit einer RA, die auf eine RA des AP2 eingestellt ist,
wobei die duplizierten CTS-Rahmen des ersten Satzes Stationen, STAs, (STA1), die dem AP1 zugeordnet sind, veranlassen, ihre Intra-BSS NAV (414) einzustellen, und STAs (STA2), die dem AP2 zugeordnet sind, veranlassen, ihre Basic NAV (424) während der Ressourcenzuweisung (413) für den AP1 einzustellen, und
wobei die duplizierten CTS-Rahmen des zweiten Satzes STAs (STA1), die dem AP1 zugeordnet sind, veranlassen, ihre Basic NAV (415) einzustellen, und STAs (STA2), die dem AP2 zugeordnet sind, veranlassen, ihre Intra-BSS NAV (425) während der Ressourcenzuweisung (423) für den AP2 einzustellen.

4. Vorrichtung nach Anspruch 3, wobei in Reaktion auf die Anweisungen in dem CoA-Rahmen (402) die Verarbeitungsschaltungsanordnung dafür konfiguriert ist:
einen ersten CTS-Rahmen (411) mit der RA, die auf die RA des AP1 eingestellt ist, für eine Übertragung während der TXOP (400) vor der Ressourcenzuweisung (413) für den AP1 zu codieren; und
einen zweiten CTS-Rahmen (412) mit der RA, die auf die RA des AP2 eingestellt ist, für eine Übertragung während der TXOP vor der Ressourcenzuweisung (423) für den AP2 zu codieren.

5. Vorrichtung nach Anspruch 4, wobei die Ressourcenzuweisung eine Zuweisung eines Kanals und einer Dauer mit der TXOP (400) umfasst, und
wobei der erste CTS-Rahmen (411) und der zweite CTS-Rahmen (412) von dem AP1 auf dem Kanal übertragen werden, der dem AP1 vor der Ressourcenzuweisung zu dem AP1 zugewiesen wurde.

6. Vorrichtung nach Anspruch 1, wobei der CoA-Rahmen (402) ein Trigger-Rahmen ist, um Peer-to-Peer-Operationen, P2P-Operationen, zu triggern, und
wobei der AP1 dafür konfiguriert ist, als getriggerte direkte, TD, P2P STA zu arbeiten, und der AP2 dafür konfiguriert ist, als TD Peer STA zu arbeiten, und
wobei der Trigger-Rahmen dazu bestimmt ist, die TD P2P STA zu triggern, um eine Direktlink-P2P-Übertragung mit der TD Peer STA während der Ressourcenzuweisung einzuleiten.

7. Vorrichtung nach Anspruch 6, wobei in Reaktion auf den Trigger-Rahmen die Verarbeitungsschaltungsanordnung des AP1 dafür konfiguriert ist, eine Bestätigung für eine Übertragung zum AP0 zu codieren, wenn der AP1 die Ressourcenzuweisung akzeptiert.

8. Vorrichtung nach Anspruch 1, wobei vor einer Übertragung des CoA-Rahmens (402) die Verarbeitungsschaltungsanordnung dafür konfiguriert ist:
einen MU-RTS-Rahmen auf den Ressourcen zu decodieren, die dem AP1 in dem CoA-Rahmen zuzuweisen sind; und
ein CTS-to-self für NAV-Schutz der dem AP1 zugewiesenen Ressourcen zu übertragen.

9. Vorrichtung nach Anspruch 8, wobei vor dem Empfangen des CoA-Rahmens (402) die Verarbeitungsschaltungsanordnung des AP1 dafür konfiguriert ist:
einen von dem AP0 empfangenen Primärkanalumschaltungs-(Primary Channel Switch, PCS-) Anforderungsrahmen zu decodieren, wobei der PCS-Anforderungsrahmen anfordert, dass der AP1 seinen primären Kanal zu einem Kanal umschaltet, der in dem CoA-Rahmen zuzuweisen ist; und
eine PCS-Antwort für eine Übertragung zu dem AP0 zu codieren, die angibt, ob der AP1 seinen primären Kanal umschalten wird.

10. Vorrichtung nach Anspruch 1, wobei die Verarbeitungsschaltungsanordnung einen Basisbandprozessor umfasst; und wobei der Speicher dafür konfiguriert ist, den CoA-Rahmen (402) zu speichern.

11. Computerlesbares Speichermedium, welches Anweisungen zur Ausführung durch eine Verarbeitungsschaltungsanordnung eines Zugangspunktes mit extrem hohem Durchsatz, EHT AP, speichert,
wobei, wenn der EHT AP dafür konfiguriert ist, als koordinierter AP, AP1, in einer Multi-AP-Gruppe zu arbeiten, welche einen Koordinator-AP, AP0,
und einen oder mehrere weitere koordinierte APs eines Satzes von koordinierten APs enthält, wobei der Satz von koordinierten APs mindestens den AP1 und einen zweiten koordinierten AP, AP2, enthält, wobei jeder koordinierte AP ein entsprechendes BSS betreibt,
die Verarbeitungsschaltungsanordnung dafür konfiguriert ist:
einen koordinierten Ankündigungsrahmen (Coordinated Announcement Frame, CoA-Rahmen) (402) zu decodieren, der von dem AP0 während einer Übertragungsgelegenheit, TXOP (400), empfangen wird, die von dem AP0 erfasst wird, wobei der CoA-Rahmen eine Ressourcenzuweisung (413) für den AP1 und eine Ressourcenzuweisung (423) für den AP2 angibt, wobei die Ressourcenzuweisungen zur Verwendung während eines Restes der TXOP bestimmt sind, um mit zugeordneten Stationen zu kommunizieren,
wobei der CoA-Rahmen Anweisungen umfasst, um den AP1 und den AP2 anzuweisen, jeweils Legacy-Rahmen (411, 421, 412, 422) zu übertragen, um Übertragungen zugeordneter Stationen während der Ressourcenzuweisungen zu verhindern, wobei die zugeordneten Stationen Stationen sind, die den BSSs der koordinierten APs zugeordnet sind, und die übertragenen Legacy-Rahmen duplizierte Legacy-Rahmen sind, die von einer Station verwendet werden, die nur Protokollspezifikationen unterstützt, die IEEE 802.11be vorausgehen.

12. Computerlesbares Speichermedium nach Anspruch 11, wobei die duplizierten Legacy-Rahmen (411, 421, 412, 422) Clear-To-Send-Rahmen, CTS-Rahmen, umfassen, und wobei die Anweisungen den AP1 und den AP2 anweisen, einen ersten Satz von duplizierten CTS-Rahmen (411, 421) während der TXOP (400) vor der Ressourcenzuweisung (413) für den AP1 zu übertragen, und
wobei die Anweisungen den AP1 und den AP2 anweisen, einen zweiten Satz von duplizierten CTS-Rahmen (412, 422) während der TXOP vor der Ressourcenzuweisung (423) für den AP2 zu übertragen.

13. Computerlesbares Speichermedium nach Anspruch 12, wobei die Anweisungen in dem CoA-Rahmen (402) angeben, dass der erste Satz von duplizierten CTS-Rahmen (411, 421) zu codieren ist mit einer Empfängeradresse (Receiver Address, RA), die auf eine RA des AP1 eingestellt ist, und dass der zweite Satz von duplizierten CTS-Rahmen (412, 422) zu codieren ist mit einer RA, die auf eine RA des AP2 eingestellt ist,
wobei die duplizierten CTS-Rahmen des ersten Satzes Stationen, STAs, (STA1), die dem AP1 zugeordnet sind, veranlassen, ihre Intra-BSS NAV (414) einzustellen, und STAs (STA2), die dem AP2 zugeordnet sind, veranlassen, ihre Basic NAV (424) während der Ressourcenzuweisung (413) für den AP1 einzustellen, und
wobei die duplizierten CTS-Rahmen des zweiten Satzes STAs (STA1), die dem AP1 zugeordnet sind, veranlassen, ihre Basic NAV (415) einzustellen, und STAs (STA2), die dem AP2 zugeordnet sind, veranlassen, ihre Intra-BSS NAV (425) während der Ressourcenzuweisung (423) für den AP2 einzustellen.

14. Computerlesbares Speichermedium nach Anspruch 13, wobei in Reaktion auf die Anweisungen in dem CoA-Rahmen die Verarbeitungsschaltungsanordnung dafür konfiguriert ist:
einen ersten CTS-Rahmen (411) mit der RA, die auf die RA des AP1 eingestellt ist, für eine Übertragung während der TXOP (400) vor der Ressourcenzuweisung (413) für den AP1 zu codieren; und
einen zweiten CTS-Rahmen (412) mit der RA, die auf die RA des AP2 eingestellt ist, für eine Übertragung während der TXOP vor der Ressourcenzuweisung (423) für den AP2 zu codieren.

15. Computerlesbares Speichermedium nach Anspruch 14, wobei die Ressourcenzuweisung eine Zuweisung eines Kanals und einer Dauer mit der TXOP (400) umfasst, und
wobei der erste CTS-Rahmen (411) und der zweite CTS-Rahmen (412) von dem AP1 auf dem Kanal übertragen werden, der dem AP1 vor der Ressourcenzuweisung zu dem AP1 zugewiesen wurde.

## Revendications

1. Appareil d'un point d'accès, « Access Point » AP, à débit extrêmement élevé, « Extremely High Throughput » EHT, l'appareil comprenant : une circuiterie de traitement ; et une mémoire,
dans lequel, lorsque l'AP à EHT est configuré pour fonctionner en tant qu'AP coordonné, AP1, dans un groupe multi-AP qui inclut un AP coordinateur, AP0, et un ou plusieurs autres APs coordonnés d'un ensemble d'APs coordonnés, l'ensemble d'APs coordonnés incluant au moins l'AP1 et un second AP coordonné, AP2, chaque AP coordonné faisant fonctionner un BBS correspondant, la circuiterie de traitement est configurée pour :
décoder une trame d'annonce coordonnée, « Coordinated Announcement » CoA, (402) reçue en provenance de l'AP0 durant une opportunité de transmission, « Transmission Opportunity » TXOP, (400), acquise par l'AP0, la trame de CoA indiquant une attribution de ressource (413) pour l'AP1 et une attribution de ressource (423) pour l'AP2, les attributions de ressource étant destinées à être utilisées durant un reste de la TXOP pour communiquer avec des stations associées,
la trame de CoA comprenant des instructions pour donner l'instruction à l'AP1 et à l'AP2, chacun, de transmettre des trames patrimoniales (411, 421, 412, 422) pour empêcher des transmission de stations associées durant les attributions de ressource, les stations associées étant des stations associées aux BSSs des APs coordonnés et les trames patrimoniales transmises étant des trames patrimoniales dupliquées utilisées par une station prenant en charge seulement des spécifications de protocole précédant IEEE 802. 11be.

2. Appareil de la revendication 1, dans lequel les trames patrimoniales dupliquées (411, 421, 412, 422) comprennent des trames prêtes à émettre, « Clear-To-Send » CTS, et dans lequel les instructions donnent l'instruction à l'AP1 et à l'AP2 de transmettre un premier ensemble de trames CTS dupliquées (411, 421) durant la TXOP (400) avant l'attribution de ressource (413) pour l'AP1, et
dans lequel les instructions donnent l'instruction à l'AP1 et à l'AP2 de transmettre un second ensemble de trames CTS dupliquées (412, 422) durant la TXOP avant l'attribution de ressource (423) pour l'AP2.

3. Appareil de la revendication 2, dans lequel les instructions dans la trame de CoA (402) indiquent que le premier ensemble de trames CTS dupliquées (411, 421) doivent être encodées avec une adresse de récepteur, « Receiver Address » RA, réglée à une RA de l'AP1 et que le second ensemble de trames CTS dupliquées (412, 422) doivent être encodées avec une RA réglée à une RA de l'AP2,
dans lequel les trames CTS dupliquées du premier ensemble amènent des stations, STAs, (STA1) associées à l'AP1 à régler leur NAV intra-BSS (414) et amènent des STAs (STA2) associées à l'AP2 à régler leur NAV de base (424) durant l'attribution de ressource (413) pour l'AP1, et
dans lequel les trames CTS dupliquées du second ensemble amènent des STAs (STA1) associées à l'AP1 à régler leur NAV de base (415) et à amener des STAs (STA2) associées à l'AP2 à régler leur NAV intra-BSS (425) durant l'attribution de ressource (423) pour l'AP2.

4. Appareil de la revendication 3, dans lequel, en réponse aux instructions dans la trame de CoA (402), la circuiterie de traitement est configurée pour :
encoder une première trame CTS (411) avec la RA réglée à la RA de l'AP1 pour la transmission durant la TXOP (400) avant l'attribution de ressource (413) pour l'AP1 ; et
encoder une seconde trame CTS (412) avec la RA réglée à la RA de l'AP2 pour la transmission durant la TXOP avant l'attribution de ressource (423) pour l'AP2.

5. Appareil de la revendication 4, dans lequel l'attribution de ressource comprend une attribution d'un canal et d'une durée avec la TXOP (400), et
dans lequel la première trame CTS (411) et la seconde trame CTS (412) sont transmises par l'AP1 sur le canal attribué à l'AP1 avant l'attribution de ressource à l'AP1.

6. Appareil de la revendication 1, dans lequel la trame de CoA (402) est une trame de déclenchement pour déclencher des opérations pair-à-pair, « Peer-to-Peer » P2P, et
dans lequel l'AP1 est configuré pour fonctionner en tant que STA P2P directe déclenchée, « Triggered direct », TD, et l'AP2 est configuré pour fonctionner en tant que STA pair TD,
dans lequel la trame de déclenchement est destinée à déclencher la STA P2P TD pour initialiser une transmission P2P de liaison directe avec la STA pair TD durant l'attribution de ressource.

7. Appareil de la revendication 6, dans lequel, en réponse à la trame de déclenchement, la circuiterie de traitement de l'AP1 est configurée pour encoder un accusé de réception pour la transmission à l'AP0 lorsque l'AP1 accepte l'attribution de ressource.

8. Appareil de la revendication 1, dans lequel, avant la transmission de la trame de CoA (402), la circuiterie de traitement est configurée pour :
décoder une trame MU-RTS sur les ressources destinées à être attribuées à l'AP1 dans la trame de CoA ; et
transmettre un CTS-à-soi pour protection de NAV des ressources attribuées à l'AP1.

9. Appareil de la revendication 8 dans lequel, avant la réception de la trame de CoA (402), la circuiterie de traitement de l'AP1 est configurée pour :
décoder une trame de demande de commutation de canal primaire, « Primary Channel Switch », PCS, reçue en provenance de l'AP0, la trame de demande de PCS demandant que l'AP1 commute son canal primaire à un canal destiné à être attribué dans la trame de CoA ; et
encoder une réponse de PCS pour la transmission à l'AP0 indiquant si l'AP1 commutera son canal primaire.

10. Appareil de la revendication 1, dans lequel la circuiterie de traitement comprend un processeur de bande de base ; et dans lequel la mémoire est configurée pour stocker la trame de CoA (402).

11. Support de stockage lisible par ordinateur qui stocke des instructions pour l'exécution par une circuiterie de traitement d'un point d'accès, « Access Point » AP, à débit extrêmement élevé, « Extremely High Throughput » EHT,
dans lequel, lorsque l'AP à EHT est configuré pour fonctionner en tant qu'AP coordonné, AP1, dans un groupe multi-AP qui inclut un AP coordinateur, AP0,
et un ou plusieurs autres APs coordonnés d'un ensemble d'APs coordonnés, l'ensemble d'APs coordonnés incluant au moins l'AP1 et un second AP coordonné, AP2, chaque AP coordonné faisant fonctionner un BBS correspondant,
la circuiterie de traitement doit :
décoder une trame d'annonce coordonée, « Coordinated Announcement » CoA, (402) recue en provenance de l'APO durant une opportunité de transmission, « Transmission Opportunity » TXOP, (400), acquise par l'AP0, la trame de CoA indiquant une attribution de ressource (413) pour l'AP1 et une attribution de ressource (423) pour l'AP2, les attributions de ressource étant destinées à être utilisées durant un reste de la TXOP pour communiquer avec des stations associées,
la trame de CoA comprenant des instructions pour donner l'instruction à l'AP1 et à l'AP2, chacun, de transmettre des trames patrimoniales (411, 421, 412, 422) pour empêcher des transmission de stations associées durant les attributions de ressource, les stations associées étant des stations associées aux BSSs des APs coordonnés et les trames patrimoniales transmises étant des trames patrimoniales dupliquées utilisées par une station prenant en charge seulement des spécifications de protocole précédant IEEE 802.11be.

12. Support de stockage lisible par ordinateur de la revendication 11, dans lequel les trames patrimoniales dupliquées (411, 421, 412, 422) comprennent des trames prêtes à émettre, « Clear-To-Send » CTS, et dans lequel les instructions donnent l'instruction à l'AP1 et à l'AP2 de transmettre un premier ensemble de trames CTS dupliquées (411, 421) durant la TXOP (400) avant l'attribution de ressource (413) pour l'API, et
dans lequel les instructions donnent l'instruction à l'AP1 et à l'AP2 de transmettre un second ensemble de trames CTS dupliquées (412, 422) durant la TXOP avant l'attribution de ressource (423) pour l'AP2.

13. Support de stockage lisible par ordinateur de la revendication 12, dans lequel les instructions dans la trame de CoA (402) indiquent que le premier ensemble de trames CTS dupliquées (411, 421) doivent être encodées avec une adresse de récepteur, « Receiver Address » RA, réglée à une RA de l'AP1 et que le second ensemble de trames CTS dupliquées (412, 422) doivent être encodées avec une RA réglée à une RA de l'AP2,
dans lequel les trames CTS dupliquées du premier ensemble amènent des stations, STAs, (STA1) associées à l'AP1 à régler leur NAV intra-BSS (414) et amènent des STAs (STA2) associées à l'AP2 à régler leur NAV de base (424) durant l'attribution de ressource (413) pour l'AP1, et
dans lequel les trames CTS dupliquées du second ensemble amènent des STAs (STA1) associées à l'AP1 à régler leur NAV de base (415) et à amener des STAs (STA2) associées à l'AP2 à régler leur NAV intra-BSS (425) durant l'attribution de ressource (423) pour l'AP2.

14. Support de stockage lisible par ordinateur de la revendication 13, dans lequel, en réponse aux instructions dans la trame de CoA, la circuiterie de traitement est configurée pour :
encoder une première trame CTS (411) avec la RA réglée à la RA de l'AP1 pour la transmission durant la TXOP (400) avant l'attribution de ressource (413) pour l'AP1 ; et
encoder une seconde trame CTS (412) avec la RA réglée à la RA de l'AP2 pour la transmission durant la TXOP avant l'attribution de ressource (423) pour l'AP2.

15. Support de stockage lisible par ordinateur de la revendication 14, dans lequel l'attribution de ressource comprend une attribution d'un canal et d'une durée avec la TXOP (400), et
dans lequel la première trame CTS (411) et la seconde trame CTS (412) sont transmises par l'AP1 sur le canal attribué à l'AP1 avant l'attribution de ressource à l'AP1.
